# EUROPEAN PATENT APPLICATION

(11) **EP 2 147 955 A1**
(43) Date of publication of application: **27.01.2010**
(21) Application number: 08160844.0
(22) Date of filing: 21.07.2008
(51) Int. Cl.: C09D 5/02, C09D 163/00

(54) **Aqueous coating binders for corrosion protection, wood and concrete**

(71) Applicant: Cytec Surface Specialties Austria GmbH, 8402 Werndorf (AT)
(72) Inventor: Feola, Roland, 8045 Graz (AT); Khatai, Leila, 8047 Graz (AT)
(74) Representative: Deckers, Hellmuth Alexander

(57) **Abstract**

This invention relates to aqueous binders comprising mass fractions of from 70 % to 98 % of chain-extended epoxy amine adducts **A** and from 2 % to 30 % of crosslinkers **C** that are selected from the group consisting of aminoplast resins, phenol resols, triazine tris-alkyl carbamates, and mixtures of such crosslinking agents, a method of making these binder mixtures, and a method of use thereof in coatings for metals, wood, cardboard, plaster, and concrete.

## Description

This invention relates to aqueous coating binders for corrosion protection, wood and concrete.

### Background of the Invention

Aqueous binders based on cationically stabilised epoxy amine adducts have been known for application in cathodic electrodeposition coatings, such as described in EP 0 249 850 A1. These are usually cured by heating their mixtures with capped di- or polyfunctional isocyanates. Epoxy amine adducts that are dispersed in water after neutralisation can be chain-extended with further epoxy resin to yield high molar mass products that do not need an additional curing agent, but form coherent coating films upon drying ("physically drying") on substrates such as metal and concrete which exhibit excellent adhesion and impart good corrosion protection. Such systems have been known from EP 1 207 187 B1, and also from copending EP application No. 07 001 858.5.

The corrosion resistance imparted to substrates covered by coatings based on such systems under high temperature and high humidity conditions (temperatures in excess of 30 ^{°}C, relative humidity in excess of 50 %) still needs to be improved.

### Summary of the Invention

It has been found that by adding a crosslinking agent such as an aminoplast resin, a phenol resol, a triazine tris-alkyl carbamate, or a mixture of such crosslinking agents provided that these are compatible, leads to aqueous binders that can be used to prepare coating compositions which show improved corrosion protection. By "compatible", such mixtures are referred to which do not lead to phase separation in the presence of the other binder resins, and which improve curing so that the overall curing rate is at least not lower compared to the curing rate with each of the components alone. Such binders may be preferably used to formulate corrosion protection coatings for metals, and to formulate sealers for wood. It has been found that it is also possible to add a polyester having carboxyl groups and hydroxyl groups, which addition leads to better adhesion to substrates, and higher elasticity of the coating film.

An object of the invention are therefore aqueous binders comprising mass fractions of from 70 % to 98 % of a chain-extended epoxy amine adduct **A** and from 2 % to 30 % of at least one crosslinking agent **C** that is selected from the group consisting of aminoplast resins, phenol resols, triazine tris-alkyl carbamates, and mixtures of such crosslinking agents.

Another object of the invention is a process for the preparation of binder mixtures comprising mass fractions of from 70 % to 98 % of a chain-extended epoxy amine adduct **A** and from 2 % to 30 % of at least one crosslinking agent **C** that is selected from the group consisting of aminoplast resins, phenol resols, triazine tris-alkyl carbamates, and mixtures of such crosslinking agents, which process encompasses the following steps:
- reaction of an epoxy resin **A1** having at least one epoxide group per molecule with an aliphatic amine **A2** having at least one primary or secondary amino group per molecule to form an epoxy amine adduct **A12,** neutralising at least partly this epoxy amine adduct **A12** by addition of acid, transferring the neutralised epoxy amine adduct **A12n** into an aqueous phase under stirring, heating the aqueous mixture and adding thereto a further epoxy resin **A3** having at least two epoxide groups per molecule, the quantity of **A3** being chosen such that the number of reactive hydroxyl and amino groups in **A12** is equal to, or greater than, the number of epoxide groups in **A3,**
- admixing the said crosslinking agent **C** to the chain-extended epoxy amine adduct **A,** and
- dispersing the said mixture of A and C in water.

### Detailed Description of the Preferred Embodiments

Binder mixtures of chain-extended epoxy amine adducts **A** and of crosslinking agents **C** according to the invention may be used to form coating films on substrates comprising mixing and homogenising the binder mixtures, optionally together with pigments or fillers, to form a coating composition, applying the said coating composition to a substrate, and subjecting the said coating composition to forced drying at a temperature of from 60 ^{°}C to 140 ^{°}C.

Aqueous dispersions of **A** and **C** may be formed by dispersing the mixture of **A** and **C** in water as described supra, it is also possible to add **C** to the water charge used for dispersion, or to an aqueous dispersion of **A.**

A preferred embodiment are binder mixtures comprising mass fractions of from 50 % to 96 % of a chain-extended epoxy amine adduct **A,** from 2 % to 30 % of a carboxy functional polyester **B** that contains a limited amount of aromatic constituents in mass fractions of up to 15 % and has an acid number of from 4 mg/g to 50 mg/g, and from 2 % to 30 % of a crosslinker **C** selected from the group consisting of aminoplast resins, phenol resols, triazine tris-alkyl carbamates, and mixtures of such crosslinking agents, with the proviso that the sum of the mass fractions of components **A, B** and **C** is always 100 %.

Another preferred embodiment is a process for the preparation of binder mixtures comprising mass fractions of from 50 % to 96 % of a chain-extended epoxy amine adduct **A,** of 2 % to 30 % of a crosslinking agent **C,** and from 2 % to 30 % of a carboxy functional polyester **B** that contains a limited amount of aromatic constituents in a mass fraction of from 0 % to 15 % and has an acid number of from 4 mg/g to 50 mg/g, which process encompasses the following steps:
- preparation of a carboxy functional polyester **B** having an acid number of from 4 mg/g to 50 mg/g by cocondensation of hydroxy functional components **B1** selected from the group consisting of linear, branched, and cyclic aliphatic compounds having at least two hydroxyl groups per molecule, and acid functional components **B2** having carboxylic acid groups, which comprise at least one aliphatic acid **B21** and at least one aromatic acid **B22**, and wherein the mass fraction of aromatic acids **B22** in the sum of the masses of the hydroxy functional components **B1** and the acid functional components **B2** is up to 15 %,
- reaction of an epoxy resin **A1** having at least one epoxide group per molecule with an aliphatic amine **A2** having at least one primary or secondary amino group per molecule to form an epoxy amine adduct **A12,** admixing the polyester **B** of the first step, neutralising at least partly this epoxy amine adduct **A12** by addition of acid, transferring the neutralised epoxy amine adduct **A12n** into an aqueous phase under stirring, heating the aqueous mixture and adding thereto a further epoxy resin **A3** having at least two epoxide groups per molecule, the quantity of **A3** being chosen such that the number of reactive hydroxyl and amino groups in **A12** is equal to, or greater than, the number of epoxide groups in **A3,** where "reactive hydroxyl and amino groups" refers to at least one of amino groups and hydroxyl groups that react with an oxiran (= epoxy) group under ring-opening and formation of an addition compound, and
- preparing an aqueous dispersion,
where the crosslinking agents **C** may be added to the mixture of the epoxy amine adduct **A** and the polyester **B,** before dispersing in water, to the water charge used for dispersion, or to the dispersion of the mixture of **A** and **B** in water.

The epoxy resins **A1** have at least one, preferably two, 1,2-epoxide groups per molecule, and are of aromatic or aliphatic nature. Glycidyl ethers of monohydric aliphatic or mixed aliphatic-aromatic alcohols, or glycidyl esters of aliphatic or aromatic monocarboxylic acids are preferred as monoepoxides. The alcohols preferably have from 4 to 20 carbon atoms and are particularly preferably selected from the group consisting of 2-ethyl hexanol, decanol, tridecanol, stearyl alcohol, and benzyl alcohol. The acids are preferably selected from the group consisting of branched aliphatic monocarboxylic acids having from 5 to 11 carbon atoms, particularly preferably, of the group consisting of glycidyl neopentanoate, glycidyl 2-ethyl hexanoate, glycidyl neodecanoate, and the mixtures of such acids which are commercially available under the trade names of ®Versatic acids. Mixtures of such ethers and such esters can likewise be used. Other aliphatic epoxides can be formed by epoxidation of olefins or diolefins, such as hexene-1, 1,3-butadiene, 1,5-hexadiene, or by reaction of epichlorohydrin with dihydric alcohols such as 1,4-butane diol, 1,6-hexanediol, or oligomeric ethylene and propylene glycols. Aromatic diepoxides may be formed by reaction of epichlorohydrin with dihydroxyaromatic compounds such as resorcinol, dihydroxy diphenyl, dihydroxydiphenyl sulphone, or dihydroxy benzophenone. Particularly preferred are reaction products of epichlorohydrin with Bisphenol A (2,2- bis-(4-hydroxyphenyl) propane), and Bisphenol F (bis-(4-hydroxyphenyl) methane). In addition to these diepoxides mentioned, glycidyl ethers of tri- or polyhydric alcohols such as trimethylol ethane and propane, ditrimethylol ethane and ditrimethylol propane, pentaerythritol, and dipentaerythritol, as well as ethoxylation or propoxylation products of the said alcohols may also be used, with an average of from two to twenty oxyalkylene groups per one hydroxyl group of the said alcohols are preferred. Glycidyl esters of dibasic or polybasic organic acids can also be used, preference being given to those of succinic acid, adipic acid, phthalic acid, isophthalic acid, terephthalic acid, trimellithic acid, trimesic acid, and benzophenone tetracarboxylic acid. It is preferred to use such epoxy resins **A1** having a specific epoxide group content *e* (*e* = ***n***(EP) / ***m***, the ratio of the amount of substance ***n***(EP) of epoxide groups in the resin, and the mass ***m*** of the resin) of from 0.5 mol/kg to 8 mol/kg, particularly preferred of from 1 mol/kg to 6 mol/kg.

As amines **A2,** aliphatic linear, branched or cyclic amines having from 2 to 40 carbon atoms are preferred. These amines **A2** may be selected from the group consisting of amines **A21** having at least one primary amino group and optionally, one or more further non-primary amino groups, and amines **A22** having at least one secondary amino group and optionally, one or more hydroxyl groups.

In addition to the at least one primary amino group, the amines **A21** may have one or more further amino groups selected from the group consisting of secondary and tertiary amino groups. Particularly preferred are diamines, triamines, and tetramines with two primary amino groups, such as ethylene diamine, 1,2- and 1,3-propylene diamine, 1,4-diaminobutane, 1,6-diaminohexane, diethylene triamine, triethylene tetramine, 1,2-, 1,3-, and 1,4-diaminocyclohexane, isophorone diamine, and 1,3-bisaminomethyl cyclohexane, or mixtures of such amines. It is also possible to use oligomeric diamino ethylene imines. Among the primary mono- and diamines having further tertiary amino groups, preference is given to those having at least one primary and at least one tertiary amino groups, and from 4 to 20 carbon atoms, the alkyl residues attached to the tertiary amino group having from 1 to 4 carbon atoms, viz., methyl, ethyl, n-propyl, iso-propyl, n-butyl, sec.-butyl, iso-butyl, and tert.-butyl groups. Such amines are 3-(N,N-dimethylamino)-propylamine, 3-(N,N-diethylamino)-propylamine, N-(2-aminoethyl)-morpholine, N,N'-bis-(2-aminoethyl)-piperazine. Among the suitable triamines, tris-2-aminoethyl-amine is mentioned. Particularly preferred are ethylene diamine, diethylene triamine, and 1,4-diaminobutane, as well as 3-(N,N-dimethylamino)-propylamine, and 3-(N,N-diethylamino)-propylamine.

The amines **A22** have at least one secondary amino group and optionally, one or more hydroxyl groups, examples for these being diethanolamine, diisopropanolamine, n-hydroxyethyl piperazine, and 2-methylamino ethanol.

If mixtures of **A21** and **A22** are used, it is preferred to choose the quantities thereof such that the number of aminic hydrogen atoms in **A22** is between 50 % and 150 %, particularly preferred from 75 % to 125 %, of the number of aminic hydrogen atoms in **A21**.

It is preferred to use organic monobasic acids to neutralise the adducts **A12,** such as formic acid, acetic acid, lactic acid, or tartaric acid. Inorganic polybasic acids such as boric acid, phosphoric acid, or their partial esters may also be used.

The epoxy resins **A3** have at least two 1,2-epoxide groups, and may be aliphatic or aromatic. Aliphatic diepoxides may be formed by epoxidation of diolefins, such as 1,3-butadiene, 1,5-hexadiene, or by reaction of epichlorohydrin with dihydric alcohols such as 1,4-butane diol, 1,6-hexanediol, or oligomeric ethylene and propylene glycols. Aromatic diepoxides may be formed by reaction of epichlorohydrin with dihydroxyaromatic compounds such as resorcinol, dihydroxy diphenyl, dihydroxydiphenyl sulphone, or dihydroxy benzophenone. Particularly preferred are reaction products of epichlorohydrin with Bisphenol A (2,2- bis-(4-hydroxyphenyl) propane), and Bisphenol F (bis-(4-hydroxyphenyl) methane). In addition to these diepoxides mentioned, glycidyl ethers of tri- or polyhydric alcohols such as trimethylol ethane and propane, ditrimethylol ethane and propane, pentaerythritol, and dipentaerythritol, as well as ethoxylation or propoxylation products of the said alcohols may also be used, with an average of from two to twenty oxyalkylene groups per one hydroxyl group of the said alcohols are preferred. Glycidyl esters of dibasic or polybasic organic acids can also be used, preference being given to those of succinic acid, adipic acid, phthalic acid, isophthalic acid, terephthalic acid, trimellithic acid, trimesic acid, and benzophenone tetracarboxylic acid. It is preferred to use such epoxy resins **A3** having a specific epoxide group content of from *e* = 0.6 mol/kg to *e* = 10 mol/kg, particularly preferred of from *e* = 1.2 mol/kg to *e* = 6 mol/kg. It is further preferred to choose such epoxy resins **A3** with a specific epoxide group content *e*(A3) which is higher than that of the epoxy resins **A1**, particularly such that the ratio *e*(A3) : ***e***(A1) is from 1.2 to 5, preferably from 1.5 to 4.

The epoxy amine adducts **A** have preferably an amine number of from 40 mg/g to 150 mg/g, and hydroxyl numbers of from 30 mg/g to 150 mg/g, in each case in relation to the mass of solid resin. Their Staudinger index is preferably from 30 cm³/g to 100 cm³/g, as measured on solutions in N-methyl pyrrolidone at room temperature (23 ^{°}C).

The quantity formerly referred to as "limiting viscosity number", called "Staudinger index" ***J***_{g} in accordance with DIN 1342, part 2.4, is the limiting value of the Staudinger function ***J***ᵥ measured with decreasing concentration and shear stress, wherein ***J***ᵥ is the ratio of the relative change in viscosity ηᵣ - 1, divided by the mass concentration β_{B} = ***m*** _{B} / ***V*** of the solute B (mass ***m*** _{B} of the solute in a volume ***V*** of the solution), given by ***J***ᵥ = (ηᵣ -1 ) /β_{B}. ηᵣ - 1 stands for the relative change in dynamic viscosity, according to ηᵣ - 1 = (η - ηₛ) / ηₛ. The relative viscosity η ᵣ is the ratio of the dynamic viscosity η of the solution under consideration and the dynamic viscosity ηₛ of the pure solvent. The physical significance of the Staudinger index is that of a specific hydrodynamic volume of the solvated polymer coil at infinite dilution and at rest. The unit conventionally used for ***J*** is "cm³/g"; formerly also "dl/g".

The acid number is defined according to DIN EN ISO 3682 as the ratio of the mass ***m***_{KOH} of potassium hydroxide needed to neutralise the sample under consideration, and the mass ***m***_{B} of that sample (mass of solids in the sample in the case of solutions or dispersions); its conventional unit is "mg/g'.

The amine number is defined according to DIN 53 176 as being the ratio of that mass ***m***_{KOH} of potassium hydroxide which consumes the same quantity of acid as the sample under consideration, and the mass ***m***_{B} of the said sample (mass of solids in the sample in the case of solutions or dispersions); its conventional unit is "mg/g".

The hydroxyl number is defined according to DIN EN ISO 4629 as the ratio of the mass ***m***_{KOH} of potassium hydroxide which has the same number of hydroxyl groups as the sample under consideration, and the mass ***m***_{B} of that sample (mass of solids in the sample in the case of solutions or dispersions); its conventional unit is "mg/g".

Dispersions of the adducts **A** in water usually have a mass fraction of solids of from 20 % to 60%.

Although such epoxy resins **A** are physically drying, that means, they do not need the addition of a crosslinker to form a stable and mechanically resistant film on a substrate, it has been found in the present invention that the addition of cosslinkers **C** that react with functional groups, in this case hydroxyl groups, present in the binder resin leads to largely enhanced properties, particularly with regard to corrosion resistance, surprisingly without sacrifice of elasticity. The elasticity can be further improved by addition of a polyester **B,** such addition also unexpectedly improves the adhesion to substrates such as metals, wood, and also concrete.

Such crosslinkers **C** that can react with hydroxyl groups are preferably
- aminoplast crosslinkers, which are at least partially etherified addition products of aliphatic aldehydes such as formaldehyde, higher aldehydes such as propionaldehyde, polyfunctional aldehydes such as glutaric dialdehyde, and the so-called aminoplast formers, preferably melamine and other aminotriazines such as acetoguanamine, benzoguanamine and caprinoguanamine, urea, thiourea, and urea derivatives such as ethyleneurea (2-imidazolidinone), propylene urea (tetrahydro-2(1H)-pyrimidinone), butylene urea, and also acetylene urea (glycoluril), including common substitution products of these such as, e. g., dihydroxyethylene urea.
- phenoplast crosslinkers, which are non-etherified or preferably etherified addition products of aliphatic aldehydes and (optionally substituted) phenols, particularly preferred addition products of formaldehyde and mono- or dinuclear phenols such as phenol itself, the isomeric cresols, 2,4- and 2,6-xylenol, bisphenol A, bisphenol F, and mixtures of such phenols. Low colour phenoplast crosslinked coatings are preferably made by using resols based on formaldehyde and p-cresol or on mixtures of phenolic bodies having a mass fraction of at least 20 % of p-cresol. Etherification is usually effected by reaction of these adducts with lower aliphatic alcohols having from one to four carbon atoms such as methanol, ethanol, propanol, and butanol, and the isomers or mixtures of these.

The amount of crosslinking agents **C** is preferably chosen in a way that at least 10 % of the hydroxyl groups present in the chain-extended epoxy amine adduct A are consumed by reaction with the crosslinking agent to form a cured coating film on the surface of a substrate.

It has further been found in the present invention that the corrosion protection performance of coatings prepared from mixtures of these dispersions of epoxy resins A and crosslinking agents **C** can still be improved, particularly under what is referred to as "tropical conditions" at temperatures of 30 ^{°}C or more, and relative humidity of more than 50 %, by adding carboxy functional polyesters **B.** Addition of these polyester also leads to improved adhesion of the coating films on substrates such as metals, wood, and concrete, and also to increased elasticity of the coating films.

The polyesters **B** are characterised by a limited amount of aromatic constituents, where the mass fraction of aromatic constituents, viz. the ratio of the mass ***m***(B22) of aromatic acids **B22**, to the sum of the masses of all hydroxy functional and acid functional constituents, ***m***(B1) + ***m***(B2), is up to 15 %, preferably from 1 % to 12.5 %, and in particular, from 2 % to 10%.

The polyesters are condensation products of hydroxy functional components **B1** and acid functional components **B2**. It is preferred that at least one of **B1** and **B2** comprises compounds with a functionality of more than 2, i. e. either a trihydric or polyhydric alcohol, or a tribasic or polybasic acid, or both. In this context, "poly" refers to functionality of 4 or more. Preferably, at least the acid component **B2** comprises a compound with a functionality of three or more.

It is also preferred that in the reaction mixture of components **B1** and **B2**, the ratio of the amount of substance of hydroxyl groups to the amount of substance of acid groups is between 0.8 mol/mol and 1.7 mol/mol, particularly preferred, between 0.9 mol/mol and 1.6 mol/mol. The acid number of the polyesters **B** preferably lies in the range of from 4 mg/g to 50 mg/g, and its hydroxyl number is preferably from 80 mg/g to 280 mg/g, particularly preferable from 100 mg/g to 270 mg/g. The Staudinger index of the polyesters, measured in a solution in dimethyl formamide at 23 ^{°}C, is preferably from 10 cm³/g to 25 cm³/g, particularly preferred from 12 cm³/g to 20 cm³/g, and especially preferred, from 15 cm³/g to 18 cm³/g.

The hydroxy functional components **B1** are aliphatic linear, branched or cyclic compounds having at least two primary hydroxyl groups. It is preferred to have at least one linear difunctional hydroxy compound **B11** and at least one further hydroxy compound **B12** in the hydroxy functional components **B1** used for the synthesis of the polyester **B,** where the compounds **B12** comprise at least one trifunctional or polyfunctional hydroxy compound **B121** or at least one branched difunctional hydroxy compound **B122.**

In another preferred embodiment, it is possible to add hydroxy functional polylactones such as polycaprolactone diols or triols, which can lower the glass temperature of the resulting polyester and thus modify the adhesion to the substrate.

Compounds **B11** are difunctional linear aliphatic alcohols having preferably from 2 to 40 carbon atoms, particularly preferably from 4 to 12 carbon atoms. Suitable compounds are ethylene glycol, 1,3-propylene glycol, 1,4-butane diol, 1,6-hexane diol, and 1,12-dodecane diol, and ether diols such as diethylene glycol or triethylene glycol.

Trifunctional alcohols **B121** have at least two primary hydroxyl groups, and at least one more hydroxyl group which can be primary or secondary. They preferably have from 3 to 12 carbon atoms. Suitable compounds include glycerol, diglycerol, trimethylol ethane, trimethylol propane, ditrimethylol ethane, ditrimethylol propane, pentaerythritol, dipentaerythritol, mannitol, and sorbitol.

Branched difunctional alcohols **B122** have at least one tertiary or at least one quaternary carbon atom and from 3 to 10 carbon atoms. Suitable compounds are 1,2-propane diol, 2-methyl-1,3-propane diol, neopentyl glycol, 2,2,4-trimethyl-1,6-hexane diol and 2,4,4-trimethyl-1,6-hexane diol.

It is preferred to have a ratio of the amount of substance of compounds **B12** to the amount of substance of compounds **B11** of from 3 % to 25 %, particularly preferred from 5 % to 20 %.

The acids **B2** comprise at least one aliphatic acid **B21** and at least one aromatic acid **B22**. Preferably, at least 80 % of the mass of the aromatic acid **B22** is constituted by a tri- or polyfunctional acid, polyfunctional again referring to acids with a functionality of four or more. Suitable acids **B22** comprise di-, tri- and polyfunctional aromatic acids such as the isomeric phthalic acids, sulphoisophthalic acid, trimellithic acid, trimesic acid, hemimellithic acid, pyromellithic acid, and benzophenone tetracarboxylic acid, as well as anhydrides thereof. The aliphatic acids **B21** are preferably linear and have from 4 to 40 carbon atoms. Suitable compounds are succinic acid, sulphosuccinic acid, glutaric acid, adipic acid, dodecanedioic acid, and dimeric fatty acids which are preferably linear.

The binder mixtures of the invention comprising chain-extended epoxy amine adducts **A** and crosslinking agents **C** provide exceptionally good corrosion protection for metals. Metal coating compositions are usually formulated with defoamers, thixotropy agents, thickeners and also dispersing agents for the pigments and fillers used, which are usually iron oxide pigments, zinc phosphate pigments, and optionally fillers such as those based on kaolin or talc, or mixtures thereof. It has also been found that the binder mixtures of the present invention are particularly useful as sealers for wood. Such coating compositions may be formulated without fillers (as a clear coat), or with fillers such as kaolin or talc, and provide a surprisingly pronounced sealing effect. Addition of polyesters **B** improves the elasticity of the coating film formed from the binder mixtures, and its adhesion to substrates.

It is also possible to modify the epoxy amine adducts **A** further by including in the reaction leading to these epoxy amine adducts **A** to the said educts, or starting components, viz. the epoxy resins **A1**, the aliphatic amines **A2,** and the further epoxy resins **A3,** at least one fatty acid **A4** as a further component. This fatty acid **A4** is preferably unsaturated, having at least one olefinic unsaturation, and has from 6 to 30, preferably from 8 to 26, and particularly preferred, from 16 to 22, carbon atoms. Preferred fatty acids **A4** are palmoleic acid, oleic acid, and erucic acid, linolic acid, linoleic acid, elaostearic acid, arachidonic acid and clupanodonic acid as well as the fatty acids obtained from natural oils such as linseed fatty acid, soy bean oil fatty acid, tall oil fatty acid, cotton seed oil fatty acid, isomerised sunflower fatty acid, rape seed oil fatty acid, and fatty acid mixtures derived from dehydrated castor oil. The fatty acid **A4** may be reacted in any sequence with the epoxy resins **A1** and the amines **A2,** before further reaction with the epoxy resin **A3,** such as first reacting **A1** and **A2,** and then reacting the product from this reaction with **A4,** or first reacting **A1** and **A4,** and then reacting the product from this reaction with **A2**, or reacting **A1** concurrently with **A4** and **A2.**

The invention is further illustrated by the following examples. In these examples as well as in the whole specification, all quantities measured in "%" relate to mass fractions or mass ratios, as measured in cg/g or g/hg, except where specifically denoted otherwise.

### Examples

### Example 1 Synthesis of an epoxy amine adduct

1900 g of an epoxy resin based on bisphenol A having a specific content of epoxide groups of 2.1 mol/kg ("epoxy equivalent weight" of 475 g/mol) were dissolved in methoxypropanol together with 129 g of dimethylamino propylamine, and 208 g of diethanolamine to form a 70 % strength solution. The mixture was heated to 110 ^{°}C and reacted under stirring until the epoxide groups were completely consumed.

### Example 2 Chain Extension

The epoxy amine adduct solution of Example 1 was heated to 150 ^{°}C, and the solvent was removed by distillation under reduced pressure. The resin was allowed to cool to 120 ^{°}C. 142 g of lactic acid (85 % strength solution in water) were slowly added, and the neutralised resin was cooled to 90 ^{°}C and then diluted to a mass fraction of solids of about 40 % by addition of desalinated water. Under stirring, 130 g of bisphenol A diglycidyl ether were added thereto at 90 ^{°}C, and the mixture was continued to stir until no more epoxy groups were detectable. After cooling to room temperature, further water was added to dilute to a mass fraction of solids of about 38 %.

### Example 3 Formulation of a Primer (P1)

The solution of Example 2 was used to formulate a cationic primer. In a mixture of 88 g of fully desalinated water and 22 g of a commercial dispersing agent (®Additol VXW 6208, Cytec Surface Specialties Austria GmbH), 3 g of a commercial defoamer (®Surfynol SE-F, E. I. DuPont de Nemours Company), 6 g of a thixotropy agent (®Luwothix HT, Lehmann & Voss), and 3 g of an acrylate thickener (®Acrysol RM 8/12, Rohm & Haas Company), 62 g of an iron oxide pigment (®Bayferrox, Lanxess AG), 106 g of a modified zinc phosphate pigment (Heucophos ZPO, Heubach GmbH), 55 g of a kaolin filler (®ASP 600, Engelhardt GmbH), and 55 g of a talc filler (®Talkum AT1, Norwegian Talc AS) were dispersed. A mixture of 480 g of the binder resin solution of Example 2 and 47.6 g of a high imino type partially methyl etherified melamine formaldehyde based crosslinker (®Cymel 328, Cytec Industries Inc.) and further 117 g of desalinated water were added thereto. The primer composition P1 thus obtained had an efflux time of approximately thirty seconds, measured in a 4 mm cup according to DIN EN ISO 2431, or DIN 53 211.

### Example 4 Formulation of a primer (P2)

Example 3 was repeated, and the melamine formaldehyde based crosslinker was replaced by 65.5 g of 2,4,6-tris-(butoxycarbonylamino)-1,3,5-triazin to yield primer composition P2.

### Example 5 Formulation of a primer (P3)

Example 3 was repeated, and the melamine formaldehyde based crosslinker was replaced by 78 g (mass of solids) of a butylated phenol-based resol to yield primer composition P3.

### Comparative Example 6

Example 3 was repeated, without addition of a crosslinker to yield primer composition P4.

### Example 7 Corrosion Test Results

A corrosion test was conducted according to DIN 50 021 using untreated steel sheets, spraying with each of the primer compositions to obtain a 30 µm dry film after forced drying at 100 ^{°}C for thirty minutes. The results are listed in Table 1.

**Table 1 Results of Corrosion Testing**

| Exposure Time | Primer P1 | Primer P2 | Primer P3 | Primer P4 (comp.) | Conventional Alkyd Resin Primer P5 (®Vialkyd AM 404) | Primer 5 with crosslinking agent according to Example 3 |
|---|---|---|---|---|---|---|
| 72 h | + | + | + | + | + | + |
| 144 h | + | + | + | + | + | + |
| 240 h | + | + | + | + | + | + |
| 400 h | + | + | + | + | - | - |
| 720 h | + | + | + | - | | |
| 1000 h | + | + | + | | | |

It can be seen from this table that the addition of a crosslinker in a physically drying primer system according to the invention brings about a marked improvement in corrosion protection, while there is no improvement in conventional alkyd resin-based physically drying primer systems.

### Example 8 Preparation of polyester PE1

Into a three neck vessel equipped with a stirrer and a reflux condenser, 531 g (4.5 mol) of hexane diol-1,6, 67 g (0.5 mol) of trimethylol propane, 438 g (3.0 mol) of adipic acid, and 58 g (0.3 mol) of trimellithic anhydride were charged. The charge was heated to 200 ^{°}C by 10 K/h, under stirring and a nitrogen blanket. Water formed in the condensation reaction was separated, and reaction was continued until the acid number had decreased below 25 mg/g. The Staudinger index of the polyester PE1 as measured in a dimethyl formamide solution at 23 ^{°}C was 16.5 cm³/g. A hydroxyl number of 209 mg/g was determined on a sample. Finally, the polyester PE1 was diluted to a mass fraction of solids of 80 % by adding further methoxypropanol.

### Example 9 Preparation of a mixture of epoxy amine adduct and a polyester

The epoxy amine adduct solution of Example 1 was heated to 150 ^{°}C, and the solvent was removed by distillation under reduced pressure. 147 g of the polyester solution of Example 8 (PE1) were added, the mixture was stirred for one further hour at 150 ^{°}C whereafter the mixture was allowed to cool to 110 ^{°}C. 60 mmol of lactid acid per 100 g of solid resins were added, and the neutralised resin mixture was diluted to a mass fraction of solids (= non-volatiles) of 40 % by addition of fully desalinated water. Within one further hour, 130 g of bisphenol A diglycidylether were added to this aqueous solution at 90 ^{°}C, and the resulting mixture was kept at this temperature under stirring until the epoxide groups were completely consumed. Further water was added to adjust the solution to a mass fraction of solids of 38 %.

### Example 10 Primer P6

The solution of Example 9 was used to formulate a cationic primer. In a mixture of 88 g of fully desalinated water and 22 g of a commercial dispersing agent (®Additol VXW 6208, Cytec Surface Specialties Austria GmbH), 3 g of a commercial defoamer (®Surfynol SE-F, E. I. DuPont de Nemours Company), 6 g of a thixotropy agent (®Luwothix HT, Lehmann & Voss), and 3 g of an acrylate thickener (®Acrysol RM 8/12, Rohm & Haas Company), 62 g of an iron oxide pigment (®Bayferrox, Lanxess AG), 106 g of a modified zinc phosphate pigment (Heucophos ZPO, Heubach GmbH), 55 g of a kaolin filler (®ASP 600, Engelhardt GmbH), and 55 g of a talc filler (®Talkum AT1, Norwegian Talc AS) were dispersed. 480 g of the binder solution of Example 9 and further 117 g of desalinated water were added thereto. The primer composition thus obtained had an efflux time of approximately thirty seconds, measured in a 4 mm cup according to DIN EN ISO 2431, or DIN 53 211.

### Example 11 Primer P7

The procedure of Example 10 was repeated, with the binder solution of Example 9 being replaced by a mixture of 480 g of the binder resin solution of Example 9 and 47.6 g of a high imino type partially methyl etherified melamine formaldehyde based crosslinker (®Cymel 328, Cytec Industries Inc.).

Corrosion testing at room temperature and at increased temperature (45 ^{°}C, 50 % relative humidity) gave the same improvement as without the addition of polyester, but it was found that the coating layer had better elasticity (T-bend and Erichsen cupping tests), and better adhesion than that prepared with primers P1, P2 and P3. When used as a sealer for wood, it was found that addition of polyester led to a decrease in discolouration upon extendend storage of sealed wood panels at elevated temperatures (40 ^{°}C over 6 weeks).

The optimum range for the mass fraction of the polyester in the binder mixture to improve adhesion and elasticity without impairing the corrosion results was found to be from 5 % to 15 %.

## Claims

1. Aqueous binders comprising mass fractions of from 70 % to 98 % of a chain-extended epoxy amine adduct **A** and from 2 % to 30 % of a crosslinker **C** selected from the group consisting of aminoplast resins, phenol resols, triazine tris-alkyl carbamates, and mixtures of such crosslinking agents.

2. Aqueous binder mixtures comprising mass fractions of from 50 % to 96 % of a chain-extended epoxy amine adduct **A,** from 2 % to 30 % of a carboxy functional polyester **B** that contains a limited amount of aromatic constituents in a mass fraction of up to 15 % and has an acid number of from 4 mg/g to 50 mg/g, and from 2 % to 30 % of a crosslinker **C** selected from the group consisting of aminoplast resins, phenol resols, triazine tris-alkyl carbamates, and mixtures of such crosslinking agents, with the proviso that the sum of the mass fractions of components **A, B** and **C** is always 100 %.

3. A process for the preparation of binder mixtures of claim 1 comprising mass fractions of from 70 % to 98 % of a chain-extended epoxy amine adduct **A** and from 2 % to 30 % of a crosslinker **C** selected from the group consisting of aminoplast resins, phenol resols, triazine tris-alkyl carbamates, and mixtures of such crosslinking agents, which process encompasses the following steps:
- reaction of an epoxy resin **A1** having at least one epoxide group per molecule with an aliphatic amine **A2** having at least one primary or secondary amino group per molecule to form an epoxy amine adduct **A12,** neutralising at least partly this epoxy amine adduct **A12** by addition of acid, transferring the neutralised epoxy amine adduct **A12n** into an aqueous phase under stirring, heating the aqueous mixture and adding thereto a further epoxy resin **A3** having at least two epoxide groups per molecule, the quantity of **A3** being chosen such that the number of reactive hydroxyl and amino groups in **A12** is equal to, or greater than, the number of epoxide groups in **A3,**
- admixing the said crosslinking agent **C** to the chain-extended epoxy amine adduct **A,** and
- dispersing the said mixture of **A** and **C** in water.

4. The process of claim 3 wherein a fatty acid **A4** is reacted with the epoxy resins **A1** and the amines **A2**, before further reaction with the epoxy resin **A3.**

5. The process of claim 3 wherein a fatty acid **A4** is reacted with the epoxy resins **A1** and the amines **A2**, before further reaction with the epoxy resin **A3.**

6. A process for the preparation of the binder mixtures of claim 2 comprising mass fractions of from 50 % to 96 % of a chain-extended epoxy amine adduct **A,** of 2 % to 30 % of a crosslinking agent **C,** and from 2 % to 30 % of a carboxy functional polyester **B** that contains a limited amount of aromatic constituents in a mass fraction of from 0 % to 15 % and has an acid number of from 4 mg/g to 50 mg/g, which process encompasses the following steps:
- preparation of a carboxy functional polyester **B** having an acid number of from 4 mg/g to 50 mg/g by cocondensation of hydroxy functional components **B1** selected from the group consisting of linear, branched, and cyclic aliphatic compounds having at least two hydroxyl groups per molecule, and acid functional components **B2** having carboxylic acid groups, which comprise at least one aliphatic acid **B21** and at least one aromatic acid **B22**, and wherein the mass fraction of aromatic acids **B22** in the sum of the masses of the hydroxy functional components **B1** and the acid functional components **B2** is up to 15 %,
- reaction of an epoxy resin **A1** having at least one epoxide group per molecule with an aliphatic amine **A2** having at least one primary or secondary amino group per molecule to form an epoxy amine adduct **A12,** admixing the polyester **B** of the first step, neutralising at least partly this epoxy amine adduct **A12** by addition of acid, transferring the neutralised epoxy amine adduct **A12n** into an aqueous phase under stirring, heating the aqueous mixture and adding thereto a further epoxy resin **A3** having at least two epoxide groups per molecule, the quantity of **A3** being chosen such that the number of reactive hydroxyl and amino groups in **A12** is equal to, or greater than, the number of epoxide groups in **A3,** where "reactive hydroxyl and amino groups" refers to at least one of amino groups and hydroxyl groups that react with an oxiran (= epoxy) group under ring-opening and formation of an addition compound, and
- preparing an aqueous dispersion,
where the crosslinking agent **C** is added to the mixture of the epoxy amine adduct **A** and the polyester **B,** before dispersing in water, to the water charge used for dispersion, or to the dispersion of the mixture of **A** and **B** in water.

7. The process of claim 6 wherein in a first step, a fatty acid **A4** is reacted with the epoxy resins **A1**, before further reaction with the amines **A2** and the epoxy resin **A3.**

8. The process of claim 6 wherein a fatty acid **A4** is reacted with the epoxy resins **A1** and the amines **A2** in a concurrent reaction.

9. A method of use of the binder mixtures of claim 1, comprising admixing to the said binder mixture at least one of a defoamer, a thickener, a dispersing agent, a filler, and a pigment, to form a coating composition, and applying the said coating composition to a substrate selected from the group consisting of a base metal, wood, cardboard, plaster, and concrete to form a coated substrate.

10. The method of use of claim 9, additionally comprising subjecting the coated substrate to forced drying at a temperature of from 60 ^{°}C to 140 ^{°}C.

11. A method of use of the binder mixtures of claim 2, comprising admixing to the said binder mixture at least one of a defoamer, a thickener, a dispersing agent, a filler, and a pigment, to form a coating composition, and applying the said coating composition to a substrate selected from the group consisting of a base metal, wood, cardboard, plaster, and concrete to form a coated substrate.

12. The method of use of claim 11, additionally comprising subjecting the coated substrate to forced drying at a temperature of from 60 ^{°}C to 140 ^{°}C.
